# EUROPÄISCHE PATENTSCHRIFT

(11) **EP 0 634 628 B1**
(45) Veröffentlichungstag und Bekanntmachung des Hinweises auf die Patenterteilung: **10.06.1998**
(21) Anmeldenummer: 94110521.5
(22) Anmeldetag: 06.07.1994
(51) Int. Cl.: G01C 11/00

(54) **Verfahren zur Erdbeobachtung**
Method for earth observation
Procédé pour l'observation de la terre

(30) Priorität: 13.07.1993 DE 4323350; 29.06.1994 DE 4422411
(43) Veröffentlichungstag der Anmeldung: 18.01.1995
(73) Patentinhaber: Daimler-Benz Aerospace Aktiengesellschaft, 81663 München (DE)
(72) Erfinder: Baudzus, Bernd, Dipl.-Ing., D-24944 Flensburg (DE); Arndt, Gerd, Dipl.-Ing., D-24943 Flensburg (DE); Hansen, Birte, D-24943 Flensburg (DE); Jensen, Lars, D-24937 Flensburg (DE); Niermann, Dieter, Dipl.-Ing., D-24972 Steinbergkirche (DE); Reimer, Bernd, Dipl.-Ing., D-24986 Satrup (DE); Tulaja, Volker,Dr., D-24983 Handewitt (DE)
(74) Vertreter: Fröhling, Werner Otto, Dr.

(56) Entgegenhaltungen:
- CA-A- 2 079 743
- FR-A- 2 219 728
- FR-A- 2 280 056
- US-A- 4 315 282
- US-A- 4 495 500
- TECHNISCHE RUNDSCHAU, Bd.85, Nr.22, 4. Juni 1993, BERN CH Seiten 40 - 45 E.HEINZELMANN 'Photogrammetrie-Know-how für Fernerkundung und Robotik'

## Beschreibung

Die Erfindung betrifft ein Verfahren zur Überwachung auf dem Erdboden befindlicher Flächen, insbesondere landwirtschaftlich nutzbarer Flächen, nach dem Oberbegriff des Patentanspruchs 1.

Die Erfindung ist insbesondere anwendbar zur Ermittlung landwirtschaftlich genutzter und/oder nutzbarer Flächen sowie zur Erstellung thematischer Karten, beispielsweise Karten bezüglich der durch Hochbauten (Häuser) und/oder Straßen sowie Plätze genutzten Flächen.

Die derzeitigen gesetzlichen Vorschriften und/oder Verordnungen erfordern, daß die Größe landwirtschaftlicher Nutzflächen eines oder mehrerer landwirtschaftlicher Betriebe sowie die Art der Nutzung genau bekannt sind. Denn auf der Grundlage dieser Daten erfolgt z. B. die Planung der zu erzeugenden landwirtschaftlichen Produkte und/oder insbesondere die Berechnung möglicherweise gewährbarer Zuschüsse und/oder die Ermittlung des möglicherweise nötigen Düngemittelbedarfs.

Die Vermessung auf dem Erdboden befindlicher Flächen, insbesondere landwirtschaftlich nutzbarer Flächen und/oder landwirtschaftlicher Nutzflächen, ist möglich, z. B. mit Hilfe erdgebundener Geodäsieverfahren, z. B. eine Vermessung mit Hilfe von Theodoliten. Ein solches Verfahren ist zwar sehr genau, aber in nachteiliger Weise langwierig und daher kostenintensiv. Insbesondere ist mit einem derartigen Verfahren keine hinreichend schnelle Ermittlung von Nutzflächen möglich, die während einer Vegetationsperiode mehrfach genutzt werden. Weiterhin ist eine Vermessung mit Hilfe von Luftbildern möglich. Ein solches Verfahren dient derzeit im wesentlichen lediglich zur generellen kartographischen Dokumentation. Es wird insbesondere nicht angegeben, welcher Art die Nutzung der Flächen ist.

Solche Verfahren ermöglichen zwar prinzipiell eine Vermessung auf dem Erdboden befindlicher Flächen (Nutzflächen und/oder nutzbarer Flächen), sind aber in nachteiliger Weise ungeeignet, wenn eine große Anzahl derartiger Flächen in kurzer Zeit genau vermessen werden soll. Ein derartiger Anwendungsfall tritt z. B. dann auf, wenn einer ganzen Region die Auflage erteilt wird, von der an sich nutzbaren landwirtschaftlichen Nutzfläche einen vorgegebenen prozentual festgelegten Anteil stillzulegen und/oder diesen Anteil lediglich in vorgebbarer Weise zu nutzen, z. B. lediglich für den Anbau einer bestimmten Getreidesorte. Eine solche Auflage bewirkt im allgemeinen, daß bei den zu der Region gehörenden landwirtschaftlichen Betrieben entsprechende geeignete Maßnahmen vorgenommen werden müssen. Diese können z. B. darin bestehen, daß eine zu dem Betrieb gehörende große zusammenhängende Nutzfläche in mehrere kleine unterschiedlich genutzte Nutzflächen aufgeteilt wird. Dabei kann sich die Aufteilung der Nutzflächen sowie deren Nutzung während einer Vegetationsperiode mehrfach ändern.

Aus der FR-A-2 280 056 ist ein Verfahren bekannt, bei welchem mittels eines Flugzeuges von einem vorgebbaren Gebiet Luftaufnahmen erstellt werden. Diese werden digitalisiert, unter Berücksichtigung der Position des Flugzeuges auf einem Bildschirm dargestellt und können dann von einem Beobachter ausgewertet werden.

In der Druckschrift TECHNISCHE RUNDSCHAU, Bd. 85, Nr. 22, 4. Juni 1993, Bern CH, Seiten 40 - 45; E. Heinzelmann: "Photogrammetie-Know-how für Fernerkundung und Robotik", werden mehrere Verfahren beschrieben zur Erstellung und Auswertung digitalisierter Orthobilder, insbesondere zur Raum- und Umweltplanung sowie zur Nutzung an intelligenten (Werkzeug-)Maschinen.

Der Erfindung liegt die Aufgabe zugrunde, ein gattungsgemäßes Verfahren dahingehend zu verbessern, daß in kostengünstiger Weise eine schnelle, genaue sowie zuverlässige Überwachung auf dem Erdboden befindlicher Flächen möglich wird.

Diese Aufgabe wird gelöst durch die in dem kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß in kostengünstiger Weise normale Luftbilder ausgewertet werden. Es sind insbesondere keine Stereoaufnahmen erforderlich. Außerdem wird keine chemische und/oder photographische Vorbehandlung benötigt, z. B. eine sogenannte Falschfarbenfotografie und/oder fotografische Aufnahmen in bestimmten vorgebbaren Spektralbereichen. Derartige Aufnahmen können aber zusätzlich oder alternativ ausgewertet werden, sofern dieses für eine Ermittlung der Daten über Nutzflächen erforderlich ist. Es können aber auch Satellitenaufnahmen unmittelbar ausgewertet werden, sofern deren geometrisches Auflösungsvermögen für eine Flächenbestimmung mit vorgegebener Genauigkeit ausreichend ist.

Ein zweiter Vorteil besteht darin, daß bei einer vorgebbaren Fläche zunächst deren im allgemeinen geschlossene Begrenzungslinie bestimmt wird und daß die Ermittlung des Flächeninhaltes lediglich auf die Begrenzungslinie bezogen wird. Dadurch wird die Ermittlung des Flächeninhaltes unabhängig von möglicherweise innerhalb der Fläche vorhandenen Inhomogenitäten. Diese können z. B. bedingt sein durch einen unterschiedlichen Reifegrad einer auf der Nutzfläche angebauten Getreidesorte.

Ein dritter Vorteil besteht darin, daß in den Luftbildern auch nicht landwirtschaftlich genutzte Flächen, z. B. Seen, Fluß- und/oder Straßenverläufe sowie Industriegebiete oder mit Gebäuden bebaute Fläche, genau ermittelt werden können. Auf diese Weise ist z. B. eine Erstellung sehr zuverlässiger und aktueller thematischer Karten möglich.

Ein vierter Vorteil besteht darin, daß die Luftbilder ausgewertet werden, ohne daß die Koordinaten der zu bestimmenden Flächen bekannt sein müssen. Es erfolgt eine Orientierung an realen Koordinaten, z. B. markanten Straßen-, Weg- und/oder Flußläufen und/oder Gebäuden. Es ist aber auch eine Verwertung von Koordinaten möglich.

Weitere Vorteile ergeben sich aus der nachfolgenden Beschreibung.

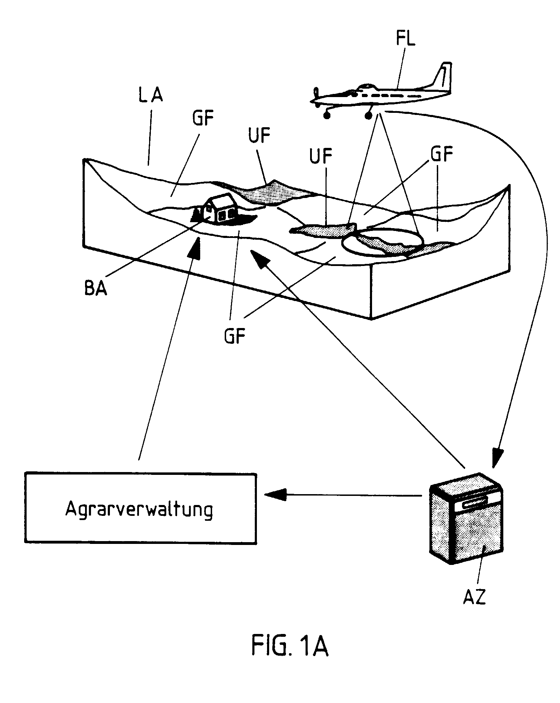

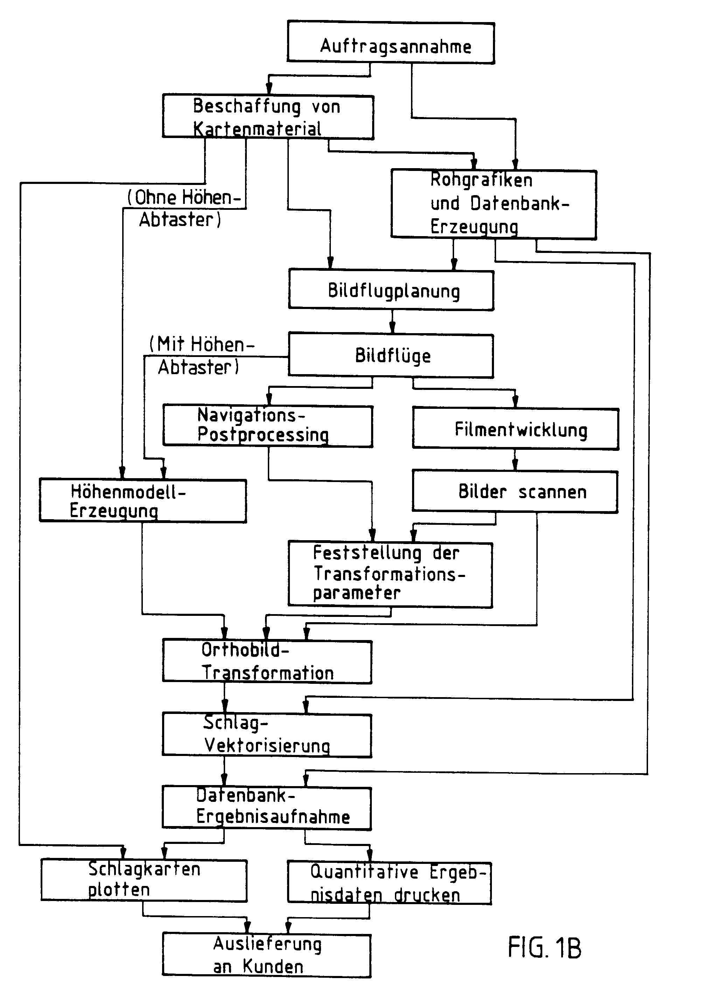

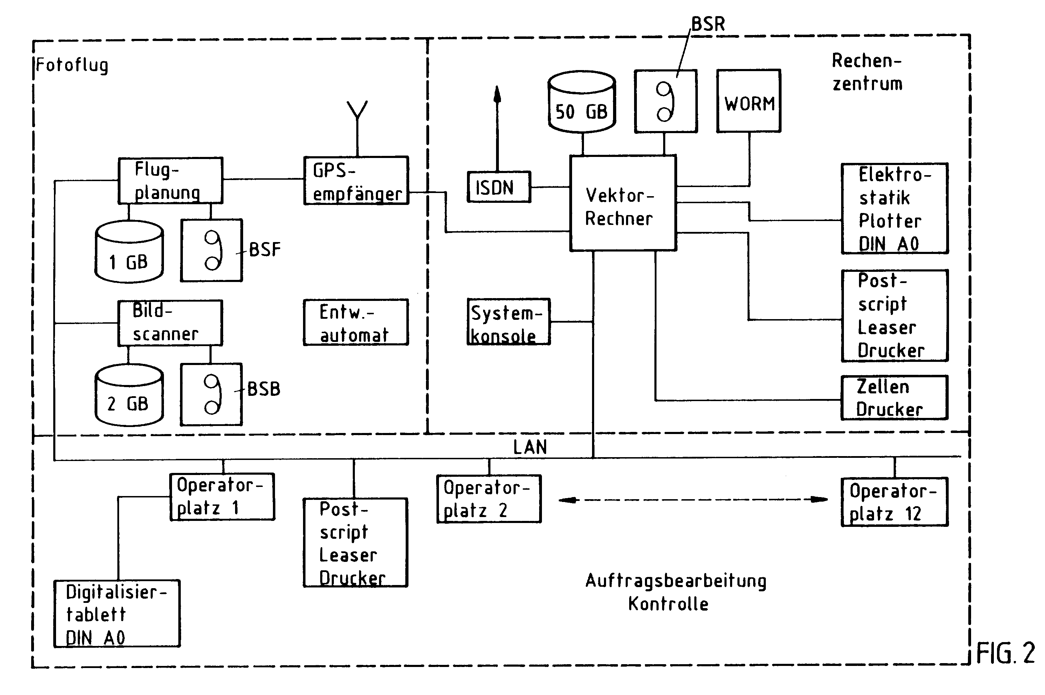

Die Erfindung wird im folgenden anhand von Ausführungsbeispielen unter Bezugnahme auf schematisch dargestellte Figuren 1A, 1B sowie 2 näher erläutert.

FIG. 1A zeigt eine perspektivische dreidimensionale Darstellung einer Landschaft LA, auf der zu einem bestimmten Zeitpunkt ungenutzte Flächen UF (schwarz markiert) sowie landwirtschaflich genutzte Flächen GF (weiß markiert) vorhanden sind. Eine genutzte Fläche GF ist z. B. dadurch gekennzeichnet, daß der Boden mechanisch bearbeitet wurde, z. B. durch Umpflügen. Eine solche genutzte Fläche wird auch Schlag genannt. Soll nun z. B. für einen bestimmten landwirtschaftlichen Betrieb der Flächeninhalt aller genutzten Flächen GF (Schläge) bestimmt werden, so erfolgt dieses in folgenden Schritten:
1. Anhand vorhandener Karten, z.B. im Maßstab 1:25000, Satellitenaufnahmen und/oder vorzugsweise anhand von Luftbildern im optischen Bereich erfolgt zunächst eine Identifizierung (Markierung) der zu dem Betrieb gehörenden genutzten Flächen (Schläge). Es ist zweckmäßig, die Schläge genauer zu bezeichnen, z. B. durch eine dem Betrieb (Kunden) zugeordnete Betriebsnummer sowie eine fortlaufende Numerierung und/oder durch amtliche Flurbezeichnungen. Alternativ oder ergänzend kann eine solche Identifizierungskarte auch Koordinatenangaben, welche Flächen kennzeichnen, enthalten. Von den zu vermessenden Schlägen entsteht also ein Rohbild, das mit Hilfe eines Scanners digitalisiert und gespeichert wird. Anhand dieses Rohbildes kann ein Schätzwert der Flächeninhalte der Schläge ermittelt werden.
2. Anhand solcher Identifizierungskarten wird nun ein Flugplan erstellt für ein Flugzeug FL (FIG. 1A), das mit einer für Luftbilder geeigneten Kamera ausgerüstet ist. Die Aufnahmen der Luftbilder erfolgen von einer Flughöhe, vorzugsweise ungefähr 1000 m über dem Gelände, die durch einen vorgebbaren Abbildungsmaßstab, z. B. 1:10000, bestimmt wird. Dabei ist der Flugweg genau festgelegt, vorzugsweise durch Satellitennavigation, z. B. durch das sogenannte GPS-Verfahren (Global-Positioning-System), das eine genaue dreidimensionale Navigation ermöglicht. Während des Fluges wird auch fortlaufend die Fluglage bezüglich der Drehachsen des Flugzeuges ermittelt, z. B. mit Hilfe an sich bekannter Bordinstrumente, z.B. einem inertialen Kreiselsystem.
3. Die Luftbilder werden vorzugsweise unmittelbar auf einem hochauflösenden Farbdiafilm im sichtbaren optischen Spektralbereich im Format 23 cm x 23 cm, der derzeit für Luftbildaufnahmen handelsüblich ist, aufgenommen. Für diese Luftbilder wird vorzugsweise keine Farbfilterung verwendet, allenfalls eine sogenannte UV-Filterung, um eine optische Schleierbildung zu vermeiden.
   Zusätzlich oder alternativ ist es möglich, andere Auswertungen durchzuführen. Dieses erfolgt z. B. mit der sogenannten Falschfarbenfotografie (Colour - Infrarot) oder es wird dem Kameraobjektiv ein speziell auf die auszuwertenden Flächen, z. B. blühende Rapsfelder, abgestimmtes Farbfilter vorgeschaltet. Damit kann z. B. ein kostengünstiger Schwarz-Weiß-Film verwendet werden. Genutzte sowie ungenutzte Flächen erscheinen dann nach der Entwicklung in gut unterscheidbaren Graustufen.
   Die Luftbilder ermöglichen eine von der Flughöhe abhängige Auflösung, die vorzugsweise in einem Bereich von 0,01 m bis 0,05 m liegt. Diese Auflösung und damit die Flughöhe werden in Abhängigkeit von der geforderten Genauigkeit für die Bestimmung der Flächen und/oder deren Flächeninhalte gewählt.
4. Die Luftbilder werden in einem Auswertezentrum AZ (FIG. 1A, FIG. 2) in einem dort vorhandenem Entwicklungsautomaten (Entw.-automat, FIG. 2) chemisch entwickelt. Es werden vorzugsweise (Farb-)Luftbilder im Format 23 cm x 23 cm verwendet, die einen guten Helligkeits- und Farbkontrast besitzen. Anschließend werden die Luftbilder mit einem (Farb-)Bildscanner (FIG. 2), vorzugsweise einem Flachbettscanner, mit wählbarer Auflösung, z. B. mindestens 300 dpi (dots per inch, das heißt Pixel pro Zoll), digitalisiert. Das Ergebnis ist für jedes Luftbild eine zugehörige digitale Echtfarben-Rasterdatei (Rasterbild), die aus einem Byte (Datenwort) pro Bildpunkt und den Farbkomponenten Rot, Grün und Blau besteht. Bei dem benutzten Filmformat (23 cm x 23 cm) benötigt jedes Rasterbild einen Speicherbedarf von ungefähr 25 Mega-Bytes. Die Speicherung erfolgt z. B. auf einem Plattenspeicher, einem optischen Speicher und/oder einem Magnetbandspeicher. Alternativ dazu ist es möglich, bereits digitalisierte Luftbilder (Rasterbilder) zu speichern. Diese sind z. B. mit einer in dem Flugzeug FL vorhandenen Videokamera mit einem digitalen Datenausgang herstellbar. Diese Rasterbilder können in dem Flugzeug auf einen digitalen Speicher zwischengespeichert und/oder unmittelbar an das Auswertezentrum AZ übertragen werden, z. B. über eine Funkstrecke.
5. Diese gespeicherten Rasterbilder können systematische geometrische Fehler (Verzerrungen) enthalten, die z. B. von nicht maßstabsgemäßer Flughöhe und/oder nicht waagerechter Fluglage, dem verwendeten Kameraobjektiv und insbesondere von den in der Landschaft vorhandenen Höhenunterschieden abhängen.
   Abweichungen von der orthogonalen Projektion, die auf der Höhenstruktur der Landschaft beruhen, werden vorteilhafterweise mit Hilfe eines zu der Landschaft gehörenden Höhenmodells, z.B. einer Höhenlinienkarte (Isohipsenkarte) kompensiert. Dieses ist bekannt, z. B. aus geodätischen Vermessungen, oder kann für jede Landschaft erstellt werden, z. B. durch Auswertung dreidimensionaler Radar- und/oder Laserbilder, die mit Hilfe eines Flugzeuges und/oder Satelliten erstellt wurden. Solche Höhenmodelle werden zunächst digitalisiert, z. B. mit Hilfe eines Scanners und maßstabsgerecht, vorzugsweise entsprechend dem Rasterbild, in der Datenverarbeitungsanlage gespeichert. Mit solchen digitalen Höhenmodellen können die zugehörigen Rasterbilder in andere Projektionen transformiert werden, zum Beispiel in die orthogonale Parallelprojektion. Beispielsweise ist es möglich, eine an einem Berghang gelegene Fläche, als Draufsicht in einer beliebigen Ebene darzustellen.
6. Derartige Fehler werden in dem Auswertezentrum AZ mit Hilfe einer dort vorhandenen hochleistungsfähigen Datenverarbeitungsanlage, vorzugsweise einem Vektor-Rechner (FIG. 2) kompensiert.
   Dazu wird in dem Vektor-Rechner zu jedem Rohbild (Schritt 1) eine digitalisierte Rohbilddatei erstellt. Zu dieser werden zugehörige Rasterbilder ausgewertet entsprechend den nachfolgend näher erläuterten Verfahrensschritten.
   Während des Bildfluges (Fotofluges) sowie in einer Flugnachverarbeitung wurden zu jedem Luftbild die dieses bestimmenden Koordinaten ermittelt. Dieses sind der (dreidimensionale) Ort der Kamera sowie deren Winkellage zum Zeitpunkt der Aufnahme des Luftbildes. Der Ort der Kamera wird vorzugsweise mit Hilfe des DGPS - Satellitennavigationssystems (Differential Global Positioning System), das mit einer ortsfesten Boden-Referenzstation arbeitet, genau bestimmt. Die Winkellage wird mit Hilfe der an Bord des Flugzeuges befindlichen Instrumente, beispielsweise dem inertialem Kreiselsystem, ermittelt. Für jedes Luftbild ist daher beispielsweise folgender Satz von Koordinaten der Kamera K vorhanden:
   - x(K)-Koordinate im Koordinatensystem des Landes
   - y(K)-Koordinate im Koordinatensystem des Landes
   - z(K)-Koordinate (Höhe über dem Meeresspiegel)
   - azimutale Drehung der Kamera um ihre optische Achse
   - Nutationswinkel (Abweichung der Kameraachse von der Senkrechten (Richtung des Erddurchmessers))
   - Präzessionswinkel (Richtung, in welcher die Nutation erfolgt, bezüglich Gitter-Nord).

   Weiterhin werden zusätzlich weitere Daten, z.B. eine Auftragsnummer (Betriebsnummer, Nummer des Schlages), für die Verwaltung und/oder Identifizierung der Luftbilder mit aufgezeichnet.
   Weil die Genauigkeiten des Filmschnitts sowie die Positionierung des entwickelten (Luftbild-)Films auf dem Scanner begrenzt sind, müssen die Luftbilder zunächst auf die inneren Kamerakoordinaten referenziert werden. Hierfür liefert die Kamera kalibrierte Positionsmarkierungen auf dem Film (in jeder Ecke und in der Mitte der Seiten), welche die Referenzierung mit der Genauigkeit einiger Mikrometer erlauben. Nach dem Scannen sind die Markierungspositionen auch in dem digitalen Rasterbild noch mit einer Genauigkeit von 1/10 Pixel durch Bildkorrelation zu messen. Dieser Korrelationsprozeß liefert für das Rasterbild die Referenz zwischen Pixelposition im Raster des Scanners und den auf dem Luftbild vorhandenen echten Bildkoordinaten (in mm mit dem Ursprung in der Kameraachse).
   Mit den gemessenen sechs Freiheitsgraden (Koordinaten und Winkel) der Kamera wird nun für die Punkte, mit den Koordinaten x, y, z, des fotografierten Geländes eine Transformationsmatrix zwischen den drei Dimensionenen x,y,z und den entsprechenden Bildkoordinaten u (horizontal), v (vertikal) in dem Rasterbild aufgestellt. Mit dieser linearen Transformation, welche die erwähnten systematischen Fehler berücksichtigt, wird ermittelt, wo jeder Punkt des Geländes auf dem Rasterbild als Abbildung zu finden ist.
   Weil in derzeit üblicher Weise alle Kartenabbildungen und insbesondere Flächenmessungen immer an einer vertikalen Parallelprojektion der Landschaft (Planimertrie) ausgeführt werden, muß das gesamte Rasterbild oder zumindest ein daraus extrahierter Ausschnitt der zu bestimmenden Fläche(n) in eine vertikale Parallelprojektion umgewandelt werden, in ein sogenanntes Orthobild. Dieses ist ein Bild, das bei einer Aufnahme aus unendlicher Entfernung mit unendlicher (Kamera-)Brennweite und genau senkrechter Kameraachse entsteht. Da dieses derzeit nicht durchführbar ist, müssen die vorhandenen (perspektivisch verzerrten) Rasterbilder mit Hilfe der ermittelten Transformationsparameter in entsprechende Orthobilder umgewandelt werden.
   Diese Transformation kann nur "rückwärts" erfolgen, weil die Transformationsmatrix nicht quadratisch ist, denn das Rasterbild (Luftbild) enthält keine Information über die dritte Dimension z (Höhe eines (Gelände)Punktes), die für eine Rekonstruktion erforderlich wäre. Deshalb wird das Verfahren wie folgt durchgeführt:
   Das Gelände wird in ein imaginäres Gitter mit festen x-, y-, z-Schritten, die fein genug sind, um die vorhandene Bildauflösung sinnvoll auszunutzen, zerlegt (näherungsweise Berechnung der durchschnittlichen Auflösung am Erdboden in Pixel pro Meter mit einem vorgebbaren Sicherheitsfaktor). Über dieses Gelände wird das erwähnte digitale Höhenmodell gelegt. Für jedes x-/y-Koordinatenpaar eines (Gelände-)Punktes wird der dazugehörige z-Wert aus dem Höhenmodell ermittelt und das resultierende (Punkt-)Koordinatentripel x/y/z in den dazugehörigen Ort u/v im Rasterbild umgewandelt. Der zugehörige Farbwert, der an diesem (Rasterbild-)Punkt vorhanden ist, wird in das x-/y-Raster des (Ziel-)Orthobildes eingetragen.
   Durchgeführte, praktische Versuche mit diesem Verfahren haben zu sehr guten Ergebnissen geführt. Lediglich in einem Gelände mit sehr steilen Hanglagen können Fehler auftreten, die auf eine Abschattung zurückzuführen sind. Die entstandenen schmalen Streifen falscher Abbildung (geschattete Flächen werden durch sogenannte "Geisterbilder" der abschattenden Flächen ausgefüllt) sind normalerweise für landwirtschaftliche Flächen nicht relevant. Zur Vermeidung solcher Abschattungen ist es vorteilhaft, bei einem hügeligen Gelände mehrere Luftbilder mit größerer Bildüberlappung herzustellen, wodurch zu schräge Blickwinkel, welche die Abschattungseffekte prinzipiell hervorrufen, vermieden werden. Dabei ist es vorteilhaft, lediglich die Mittenbereiche der Luft- und/oder Rasterbilder zu nutzen.
   Um bereits vorhandene gespeicherte Rasterbilder optimal zu nutzen, sucht ein spezielles Datenverarbeitungs-Programm für jeden Punkt in einem Gelände das für die Transformation am besten geeignete Rasterbild aus einer Vielzahl von Rasterbildern, die diesen Punkt wahrscheinlich enthalten, heraus. Das Programm gibt auch an, wenn kein Rasterbild für diesen Punkt verfügbar ist oder wenn die zu erwartende Qualität zweifelhaft ist, weil in dem Rasterbild der Punkt zu weit in den Bildecken angeordnet ist. In einem solchen Fall ist es erforderlich, für diesen (Gelände-)Punkt mindestens ein auswertbares weiteres Luft- sowie Rasterbild zu erstellen und daraus ein zugehöriges Orthobild.
   Das bisher beschriebene Verfahren erzeugt im Prinzip aus allen vorhandenen Rasterbildern ein einziges Orthobild. Da dieses auf dem Vektor-Rechner allenfalls mit einem unwirtschaftlichen Aufwand handhabbar wäre, wird das Gebiet (Gelände) in 1 km² große Planquadrate eingeteilt. Jedes Planquadrat erhält eine eigene Orthobilddatei, die leicht durch geeignete Koordinaten aus einem (Orthobild-)Katalog ermittelbar ist und die damit bereitsteht für die nun folgenden Auswertungsschritte.
7. Als Hauptauswertungsschritt müsssen nun aus dem Orthobild die zu bestimmenden landwirtschaftlichen Schläge vektorisiert werden mit dem Ziel, die Anbauart zu identifizieren und die zugehörige planimetrische Fläche zu messen.
   Dieses wird mittels eines geographischen Informationssystems unter Verwendung der Orthobilder, der landwirtschaftlichen Datenbank sowie eines halbautomatischen Vektorisierungsprogramms durchgeführt.
   Um die Vektorisierung auszuführen, bekommt ein Bediener auf einem (Farb-)Bildschirm aus der Identifizierungskarte eine Rohgrafik angezeigt, welche die Rohbilder und die zu ermittelnden Schläge enthält. Da diese Rohgrafik auch bezüglich des Koordinatensystems referenziert ist, kann der Bediener die Rohgrafik einfach transparent dem dazugehörigen Teil eines Orthobildes überlagern und die verschiedenen Schläge identifizieren. In einem optional zu öffnenden Bildschirmfenster kann der Bediener sich zur Unterstützung eine zu der Rohgrafik gehörende Datenliste, die beispielsweise für jeden Schlag die Anbauart sowie den geschätzten Flächenwert enthält, anzeigen lassen.
   In den meisten Fällen kann in dem Orthobild die Anbauart durch die Farbe sowie die Art, in der das Gelände kultiviert wurde (Fahrgassen landwirtschaftlicher Fahrzeuge usw.), bestimmt und/oder bestätigt werden. In zweifelhaften Fällen (wichtig, wenn durch eine Behörde eine Überwachung angeordnet wird) muß das Originalfoto (Luftbild) aus einem Archiv gezogen und mit einer Lupe untersucht werden.
   Zur genauen Bestimmung eines Schlages sowie der zugehörigen Schlaggrenzen wird deren Vektorisierung halbautomatisch anhand des zugehörigen Orthobildes vorgenommen. Zu einem großen Anteil sind die Schlaggrenzen entlang einer gewissen Strecke ziemlich gleichförmig, besonders dann, wenn Fahrspuren und/oder Fahrgassen zu sehen sind. In solchen Fällen sucht der Bediener sich an einer typischen Stelle der im Orthobild abgebildeten Schlaggrenze einen Referenzquerschnitt und markiert diesen mittels einer Marke (Cursor). Ein Datenverarbeitungs-Programm speichert dann die Eigenschaften, z.B. Farb- und/oder Kontrastwerte, des Referenzquerschnittes und ermittelt dann anhand des Referenzquerschnittes und von diesem ausgehend den Verlauf der Schlaggrenze derart, daß die Fläche (Schlag) in einer vorgebbaren Weise, z.B. im Uhrzeigersinn, umrundet wird und daß ein vorgebbarer Toleranzbereich des Referenzquerschnittes nicht überschritten wird. Wo dieses der Fall ist, kann das Programm nicht fortgesetzt werden, weil sich z.B. die Querschnittsform geändert hat. In diesem Fall muß der Bediener die entstanden Lücken durch eine Handvektorisierung mit Hilfe einer sogenannten Maus schließen oder alternativ einen neuen Referenzquerschnitt wählen. Damit der Bediener dieses sehr genau ausführen kann, kann er nahezu beliebig starke Ausschnittvergrößerungen anwenden, um z.B. mit Pixelgenauigkeit den Ort des Referenzquerschnittes zu definieren.
   Jeder zu vermessende Schlag ist danach mit einer Kontur, der Schlaggrenze umrandet, die einen geschlossenen Polygonzug darstellt. Diese Topologie beinhaltet automatisch die Eigenschaft, daß jeder Geländepunkt nur zu einem einzigen Polygon gehören kann. Jedes Überschneiden von Polygonzügen würde nämlich unverzüglich ein neues Polygon, nämlich die Schnittmenge, erzeugen, das zu keinem Schlag gehört. Ein derartiger möglicher Fehler wird markiert und damit dem Bediener kenntlich gemacht. Das Ergebnis dieses Verfahrensschrittes ist ein Satz von Polygonen mit eindeutiger Zugehörigkeit jedes Einzelpolygons zu einem Schlag.
8. Die Messung der Flächeninhalte der so definierten Schläge wird danach automatisch durchgeführt. Die Berechnung eines Flächeninhaltes erfolgt nach an sich bekannten geometrischen Formeln und/oder Algorithmen, in Flächeneinheiten, z. B. Hektar (ha), die in der Landwirtschaft derzeit üblich sind. Die Schlaggrenze kann z. B. den deutlich erkennbaren Unterschied zwischen frisch gepflügtem und nicht gepflügtem Ackerland markieren. Es ist ersichtlich, daß mit diesem Verfahren die Schlaggrenzen sehr unterschiedlicher Flächen ermittelt und damit deren Flächeninhalte bestimmt werden können. Beispielsweise können so die Flächeninhalte von Wald- und/oder Seegebieten oder Straßen und/oder Plätzen bestimmt werden. Weitere Anwendungsgebiete sind nachfolgend noch näher erläutert.
   Zur Kontrolle werden nun diese genau ermittelten Flächenwerte der Schläge mit den anhand der Identifizierungskarte (Rohbildern) ermittelten Schätzwerten verglichen. Diese sind beispielsweise gespeichert in einer geographischen Datenbank, die außerdem die Polygone, ihre einzelnen Kantenteile, ihren Flächeninhalt, ihren Umfang und ihre Zugehörigkeitsreferenz, hier die erwähnte eindeutige Schlagnummer enthält.
   Durch diesen Vergleich sind grobe systematische Fehler, z.B. ein Bedienfehler, vermeidbar, insbesondere bei komplizierten Formen einer Fläche (Schlag). Dieser Vergleich erfolgt mit Hilfe der Datenverarbeitungsanlage oder manuell durch den Bediener.

Mit diesem Verfahren, unter Verwendung einer geschlossenen Begrenzungslinie (Schlaggrenze), ist der Flächeninhalt genau bestimmbar, z. B. bei landwirtschaftlichen Flächen in einem Maßstab von 1:5000, einer Scanner-Auflösung von 300 dpi und einem ausreichend genauem Höhenmodell, mit einem Fehler aus dem Bereich von ± 0,5 % bis ± 1 %. Dabei wird als Referenz (Fehler = 0 %) eine Fläche angenommen, die mit Hilfe von genauen geodätischen Methoden, z. B. mit Hilfe eines Theodoliten, vermessen wurde. Dabei ist der genannte prozentuale Fehler von der absoluten Größe und der Form der Fläche (Schlag) abhängig.

Das beschriebene Verfahren ist insbesondere zur schnellen und genauen Vermessung eines großen Gebietes geeignet. So kann beispielsweise das deutsche Bundesland Schleswig-Holstein in ungefähr einer Woche komplett durch Luftbilder, die eine Auflösung, nach dem Scannen, von ungefähr 0,1 m bis 0,5 m besitzen, von einem Flugzeug erfaßt werden. Die Anzahl der pro Zeiteinheit, z. B. einem Tag, auswertbaren Flächen (Schläge) ist abhängig von der Leistungsfähigkeit der Datenverarbeitungsanlage sowie der daran angeschlossenen Peripheriegeräte, z. B. Scanner.

Die so ermittelten Ergebnisse, z.B. grafische Darstellungen der Schläge (Schlagkarten) sowie die zugehörigen (Datenbank-)Daten können ausgegeben werden, beispielsweise mit geeigneten Grafik-Plottern und/oder Textdruckern, und an den Kunden, welcher den Auftrag erteilt hat, ausgeliefert werden. Dabei ist es vorteilhaft, die Schläge entsprechend den dort vorhandenen Anbauarten farbig auszugeben, beispielsweise auf einer Hintergrundkarte, in der zur besseren Orientierung die weitere Umgebung, z.B. Staßen,

Plätze, Wälder, Gewässer, eingezeichnet ist. In diesen Schlagkarten können zusätzlich die Schlagnummern angegeben werden, wodurch deren Identifizierung erleichtert wird. Außerdem können die Ergebnisse und/oder daraus abgeleitete Auswertungen weitergeleitet werden, z. B. an eine Agrarverwaltung sowie an den Besitzer BA (FIG. 1A) der Flächen (Schläge).

Zur weiteren Erläuterung des beschriebenen Verfahrens sind die dafür nötigen Schritte in grafischer Form als Blockbild in Fig. 1B dargestellt.

FIG. 2 zeigt einen exemplarischen Aufbau des Auswertezentrums AZ (FIG. 1A). Dieses enthält im wesentlichen ein Rechenzentrum, das z. B. eine als Vektorrechner bezeichnete Datenverarbeitungsanlage sowie die dort angeschlossenen und dargestellten Peripheriegeräte besitzt. Diese bestehen beispielsweise aus einem Anschluß für das ISDN-Netz (ISDN), digitalen Platten- und/oder Bandspeichern, die mit 50 GB (50 Gigabyte Plattenspeicher), BSR (Bandspeicher) sowie WORM bezeichnet sind, mehreren Bildausgabegeräten, z. B. einem (Farb-)Elektrostatik-Plotter für das deutsche Papierformat DIN A0, einem Laserdrucker, einem Zeilendrukker sowie einer sogenannten Systemkonsole (Tastatur und Monitor) zur Kontrolle des Rechenzentrums. An dieses sind über eine Datenleitung LAN ("Local Area Network") mehrere Dateneingabeplätze und/oder Datenausgabeplätze, die in Abteilungen zusammenfaßbar sind, angeschlossen. Diese sind z. B. mit Fotoflug sowie Auftragsbearbeitung, Kontrolle bezeichnet. Die mit Fotoflug bezeichnete Datenverarbeitungsanlage, an die ein GPS-Empfänger für die erwähnte DGPS-Satellitennavigation, mehrere Platten- und/oder Band-Datenspeicher 1 GB, BSF sowie ein Bildscanner, zur Digitalisierung der Luftbilder, mit zugehörigen Platten- und/oder Band-Datenspeichern 2 GB, BSB angeschlossen sind. Die auf Diafilm aufgenommenen Luftbilder werden in einem Entwicklungsautomaten (Entw.automat) für Luftbild-Diafilm bearbeitet.

Die mit Auftragsbearbeitung, Kontrolle bezeichnete Abteilung enthält beispielsweise Operatorplätze 1 bis 12, einen (Postscript-)Laserdrucker sowie ein an den Operatorplatz 1 angeschlossenes Digitalisiertablett für das deutsche (Papier-)Format DIN A0. Jeder Operatorplatz besteht z. B. aus einem sogenannten Arbeitsplatzrechner (Workstation) mit einer Tastatur und einem Monitor (Sichtschirm). Mit Hilfe eines solchen Operatorplatzes können vielfältige Dateneingaben und/oder Datenausgaben vorgenommen werden, z. B. manuelle Eingaben der Koordinaten einer Fläche, Digitalisierung der Identifizierungskarte sowie eine Kontrolle der Erzeugung einer Begrenzungslinie.

Soll nun beispielsweise der zu erwartende Ertrag an Rapssamen ermittelt werden, so sind im Rechenzentrum die dafür in Frage kommenden mit Raps bepflanzten Flächen (Schläge) an sich bekannt, z. B. durch entsprechende Angaben der Landwirte. Zur genauen Ermittlung des zu erwartenden Ertrages wird nun z. B. zum Zeitpunkt der Rapsblüte die mit Fotoflug gekennzeichnete Abteilung beauftragt, entsprechende Überwachungs- und/oder Auswertungsflüge durchzuführen. Die entsprechenden Flugwege werden dabei vorzugsweise durch Satellitennavigation (GPS-Empfänger) geplant und durchgeführt. Das entsprechend belichtete Filmmaterial, z. B. zusätzlich mit Falschfarbenfotografie aufgenommen, wird in einem Entwicklungsautomaten (Entw.-Automat) entwickelt, mit Hilfe eines Bildscanners in eine digitale Form umgewandelt und anschließend in dem Rechenzentrum ausgewertet. Dort kann dann die mit Raps bebaute Fläche (Schlag) in der beschriebenen Weise ausgewertet werden. Diese Angaben können an verschiedene Stellen in einer für diese geeigneten Form weitergegeben werden, z. B. an die mit Auftragsbearbeitung, Kontrolle bezeichnete Stelle (FIG. 2). Dort können z. B. für jeden Landwirt (Besitzer BA) der Flächen die noch benötigten Mengen an Dünge- und/oder Schädlingsbekämpfungsmittel berechnet werden sowie der Zeitpunkt für deren optimale Anwendung. Weiterhin können z. B. für jeden Landwirt die noch erforderlichen vorgeschriebenen gesetzlichen Anträge und/oder Formulare vorbereitet sowie der zu erwartende Erlös ermittelt werden. Desweiteren können zusätzlich z. B. Ölmühlen informiert werden, z. B. über den Ertrag und/oder den zu erwartenden Zeitpunkt der Ernte. Diese Angaben können auch an genossenschaftliche und/oder staatliche Stellen, z. B. Landwirtschaftsämter, weitergeleitet werden, so daß eine umfassende und hochgenaue Planung und/oder Bestandsermittlung möglich wird.

Die Erfindung ist nicht auf die beschriebenen Beispiele beschränkt, sondern sinngemäß auf weitere anwendbar. Z. B. können bei mit Getreide angebauten Flächen die entsprechenden Größen sowie die zu erwartenden Erträge ermittelt werden. Weiterhin ist z. B. eine genaue Auswertung von forstwirtschaftlich genutzten Flächen möglich, z. B. die Größe der durch einen Sturm geschädigten Flächen.

Da bei vielen Luftbildern auch nicht landwirtschaftlich nutzbare Flächen, z. B. bebaute Ansiedlungen, Straßen sowie Plätze, erfaßt werden, können mit dem beschriebenen Verfahren zusätzlich und/oder alternativ auch diese Flächen ermittelt sowie deren Größe berechnet werden. Mit dem beschriebenen Verfahren sind auf dem Gebiet der Land- und Forstwirtschaft insbesondere Flächenanalysen, Tierzählung auf der Basis von Luftbildern, optimierte, standortbezogene Überwachung der Ausbringung von Produkten für die Land- und Forstwirtschaft, wie z. B. Saatgut, Düngemittel oder Schädlingsbekämpfungsmittel, möglich.

Auf dem Gebiet des Raumordnungswesens und des Städtebaus können insbesondere Planungsunterlagen und kartographische Unterlagen für die Landnutzungsplanung und die Landnutzungsklassifizierung, wie z. B. die Kartierung von Boden-, Bodennutzungs- und Geländereliefdarstellungen, sowie Höhenmodellen, Katastern für Altlasten, für die Archäologie, für die Feststellung von Wald- und Dürreschäden, für Maßnahmen der Flurbereinigung, des Landtausches und der Flächenstillegung und für Schlagplanungen, Landschaftsplanung erstellt werden.

Außerdem kann eine allgemeine Landvermessung sowie die Berechnung von Deponiervolumina sowie anderer Ablagerungen vorgenommen werden. Weiterhin ist eine Luftüberwachung von Objekten, wie z. B. Gewässer, land- und forstwirtschaftliche Flächen, Verkehrswege, Siedlungsgebiete, Industrieanlagen, Mülldeponien möglich.

Eine besonders vorteilhafte Anwendung der Erfindung ist in der angemeldeten deutschen Patentanmeldung DE-A-44 23083.4 (internes Aktenzeichen UL 92/38A) beschrieben.

## Patentansprüche

1. Verfahren zur Überwachung auf dem Erdboden befindlicher Flächen, insbesondere landwirtschaftlich nutzbarer Flächen, durch Auswertung mindestens eines mittels einer Kamera erzeugten Luftbildes, das von einem vorgebbarem Gebiet in vorgebbarem Abbildungsmaßstab hergestellt wird, wobei,
- das Luftbild in eine digitalisierte Form umgewandelt und in eine Datenverarbeitungsanlage eingelesen wird,
- aus der digitalisierten form als vorgebbare kartographische Darstellung eine Orthobild-Darstellung erzeugt wird und
- in der Orthobild-Darstellung mindestens eine Fläche ausgewählt und von dieser Fläche der Flächeninhalt bestimmt wird, dadurch gekennzeichnet,
- daß zu dem Luftbild, in welchem die ausgewählte Fläche enthalten ist, ein Höhenmodell ermittelt, in digitaler Form in die Datenverarbeitungsanlage eingelesen und dort gespeichert wird,
- daß von dem digitalisierten Luftbild mittels des digitalisierten Höhenmodells sowie einer Transformationsmatrix, die die das Luftbild bestimmenden Lageparameter der Kamera enthält, zumindest für die ausgewählte Fläche das zugehörige Orthobild berechnet wird,
- daß in dem berechneten Orthobild bei der ausgewählten Fläche an deren Randbereich aufgrund der dort vorhandenen Helligkeits- und/oder Kontrast- und/oder Farbunterschiede ein für den Randbereich typischer Referenzquerschnitt gewählt wird,
- daß in dem berechneten Orthobild ausgehend von dem Referenzquerschnitt und nach dessen Maßgabe die ausgewählte Fläche an ihrem Randbereich umrundet wird, so daß eine die Fläche umgebende geschlossene Begrenzungslinie entsteht und
- daß in dem berechneten Orthobild der durch die Begrenzungslinie festgelegte Flächeninhalt der ausgewählten Fläche ermittelt wird.

2. Verfahren nach Anspruch 1, dadurch gekennzeichnet, daß auf einer topographischen Karte, die als Identifizierungskarte verwendet wird, zunächst mindestens eine Fläche, deren Flächenparameter bestimmt werden sollen, markiert wird und daß nach Maßgabe der Identifizierungskarte mindestens ein Luftbild, welches die Fläche enthält, auf einem Farbfilm erstellt wird.

3. Verfahren nach einem der vorhergehenden Ansprüche, dadurch gekennzeichnet, daß das Luftbild mit Hilfe eines Luftfahrzeuges, dessen Flugweg durch Satellitennavigation bestimmt wird, erstellt wird.

4. Verfahren nach einem der vorhergehenden Ansprüche, dadurch gekennzeichnet, daß das Höhenmodell mit Hilfe einer Radar- und/oder Laserabtastung des die Fläche enthaltenden Geländes erstellt wird.

5. Verfahren nach einem der vorhergehenden Ansprüche 2-4, dadurch gekennzeichnet, daß die Identifizierungskarte anhand einer Satellitenaufnahme und/oder vorhandener Luftbilder erstellt wird.

6. Verfahren nach einem der vorhergehenden Ansprüche 2-5, dadurch gekennzeichnet, daß die Identifizierungskarte digitalisiert wird und daß für die darauf markierten Flächen ein Schätzwert für die zugehörigen Flächeninhalte erstellt wird.

## Claims

1. Method of monitoring areas located on the earth surface, especially agriculturally usable areas, through evaluation of at least one aerial image which is generated by means of a camera and which is produced from a predetermined region in predeterminable scale of reproduction, wherein
- the aerial image is converted into a digitalised form and read into a data processing apparatus,
- an orthographic representation is generated from the digitalised form as predeterminable cartographic representation,
- at least one area is selected in the orthographic representation and the surface area is determined of this area,
characterised thereby
- that for the aerial image, in which the selected area is contained, a height model is ascertained, read into the data processing apparatus in digital form and stored there,
- that from the digitalised aerial image at least for the selected area the associated orthographic image is computed by means of the digitalised height model as well as a transformation matrix containing the positional parameters, which determine the aerial image, of the camera,
- that in the computed orthographic image for the selected area at the edge region thereof a reference cross-section, which is typical for the edge region by virtue of the brightness and/or contrast and/or colour difference present there, is selected,
- that in the computed orthographic image starting from the reference cross-section and in accordance with the scale thereof the selected area is rounded off at its edge region so that a closed boundary line surrounding the area arises and
- that in the completed orthographic image the surface area, which is established by the boundary line, of the selected area is ascertained.

2. Method according to claim 1, characterised thereby that on a topographic map, which is used as an identification map, initially an area of which the area parameters are to be determined is marked and that according to the scale of the identification map at least one aerial image which contains the area is created on a colour film.

3. Method according to one of the preceding claims, characterised thereby that the aerial image is created with the aid of an aircraft, the flight path of which is determined by satellite navigation.

4. Method according to one of the preceding claims, characterised thereby that the height model is created with the aid of a radar and/or laser scanning of the terrain containing the area.

5. Method according to one of the preceding claims 2 to 4, characterised thereby that the identification map is created on the basis of a satellite survey and/or aerial images that are present.

6. Method according to one of the preceding claims 2 to 5 characterised thereby that the identification map is digitalised and that for the area marked thereon an estimated value for the associated surface area is created.

## Revendications

1. Procédé de surveillance de surfaces se trouvant sur le sol, en particulier de surfaces utilisables pour l'agriculture, par évaluation au moins d'une photographie aérienne générée à l'aide d'une caméra, qui est obtenue d'un domaine prédéterminé à une échelle d'image prédéterminée,
- la photographie aérienne étant convertie en une forme numérisée et introduite dans une installation de traitement de données,
- à partir de la forme numérisée en tant que représentation cartographique prédéterminée, est générée une représentation d'image orthogonale, et
- dans la représentation d'image orthogonale, au moins une surface est choisie et à partir de cette surface, le contenu de la surface est déterminé, caractérisé
- en ce que, de la photographie aérienne, dans laquelle est contenue la surface choisie, un modèle d'altitude est détecté, introduit sous forme numérique dans l'installation de traitement de données et y est mémorisé,
- en ce qu'à partir de la photographie aérienne numérisée au moyen du modèle d'altitude numérisé ainsi que d'une matrice de transformation, qui contient les paramètres de la caméra déterminant la photographie aérienne, au moins pour la surface sélectionnée, est calculée l'image orthogonale associée,
- en ce que, dans l'image orthogonale calculée, dans le cas de la surface sélectionnée sur le bord de celle-ci, à partir de la différence d'éclairement et/ou de contraste et/ou de couleur présente dans celle-ci, une section de référence typique est sélectionnée pour la partie de bord,
- en ce que, dans l'image orthogonale calculée à partir de la section de référence et selon les dimensions de celle-ci, la surface sélectionnée est arrondie sur son bord, de sorte qu'une ligne de limitation fermée entourant la surface est obtenue et
- en ce que, dans l'image orthogonale calculée, le contenu d'image fixé par la ligne de délimitation de la surface sélectionnée est détecté.

2. Procédé selon la revendication 1, caractérisé en ce que, sur une carte topographique, qui est utilisée en tant que carte d'identification, tout d'abord au moins une surface dont les paramètres de surface doivent être déterminés, est repérée et qu'en raison de la carte d'identification, au moins une photographie aérienne qui contient la surface est établie sur une pellicule couleur.

3. Procédé selon l'une quelconque des revendications précédentes, caractérisé en ce que la photographie aérienne est établie à l'aide d'un aéronef, dont la trajectoire de vol est déterminée par navigation par satellites.

4. Procédé selon l'une quelconque des revendications précédentes, caractérisé en ce que le modèle d'altitude est établi à l'aide d'une analyse radar et/ou laser de la région contenant la surface.

5. Procédé selon l'une quelconque des revendications précédentes 2 à 4, caractérisé en ce que la carte d'identification est obtenue à l'aide d'un cliché par satellites et/ou de photographies aériennes existantes.

6. Procédé selon l'une quelconque des revendications précédentes 2 à 5, caractérisé en ce que la carte d'identification est numérisée et en ce que pour les surfaces repérées sur celle-ci, une valeur estimée est établie pour les contenus de surface associés.
